# EUROPÄISCHE PATENTSCHRIFT

(11) **EP 3 906 271 B1**
(45) Veröffentlichungstag und Bekanntmachung des Hinweises auf die Patenterteilung: **09.12.2026**
(21) Anmeldenummer: 19824364.4
(22) Anmeldetag: 23.12.2019
(51) Int. Cl.: C08G 59/40, C08G 18/79, C09J 163/00, C08L 63/00

(54) **HITZEHÄRTENDE EPOXIDHARZZUSAMMENSETZUNG MIT TIEFER AUSHÄRTUNGSTEMPERATUR UND GUTER LAGERSTABILITÄT**
HEAT-CURABLE EPOXY RESIN COMPOSITION WITH LOW CURING TEMPERATURE AND GOOD STORAGE STABILITY
COMPOSITION DE RÉSINE ÉPOXY THERMODURCISSABLE À BASSE TEMPÉRATURE DE DURCISSEMENT ET À BONNE STABILITÉ AU STOCKAGE

(30) Priorität: 03.01.2019 EP 19150161
(43) Veröffentlichungstag der Anmeldung: 10.11.2021
(73) Patentinhaber: Sika Technology AG, 6340 Baar (CH)
(72) Erfinder: MUNZINGER, Noah, 8047 Zürich (CH); GALLO, Dominique, 8112 Otelfingen (CH)
(74) Vertreter: Sika Patent Attorneys
(86) Internationale Anmeldenummer: PCT/EP2019/086914
(87) Internationale Veröffentlichungsnummer: WO 2020/141130

(56) Entgegenhaltungen:
- WO-A1-2009/063043
- WO-A1-2016/159224
- JP-A- 2016 130 287

## Beschreibung

### Technisches Gebiet

Die Erfindung betrifft das Gebiet der hitzehärtenden Epoxidharzzusammensetzungen, insbesondere für den Einsatz als Rohbauklebstoff.

### Stand der Technik

Hitzehärtende Epoxidharzzusammensetzungen sind seit langem bekannt. Es wurden schon seit einiger Zeit Anstrengungen unternommen, den grossen Nachteil von Epoxidharzzusammensetzungen, nämlich ihre Sprödigkeit, welche bei Schlagbeanspruchung dazu führt, dass die ausgehärtete Epoxidharzzusammensetzung Risse bekommt, bzw. zerstört wird, zu beheben oder zumindest stark zu vermindern. Dies wurde durch den Zusatz von Zähigkeitsmodifikatoren oder durch chemische Modifikation von Epoxidharzen bereits versucht.

Ein wichtiges Einsatzgebiet von hitzehärtenden Epoxidharzzusammensetzungen findet sich im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.

Damit eine schnelle Härtung erfolgen kann, können neben hitzeaktivierbaren Härtern für Epoxidharze Beschleuniger verwendet. Bekannte Kategorien von Beschleunigern sind beispielsweise latente Imidazole sowie Amin-Bortrifluorid Komplexe.

WO 2009/063043 A1 beschreibt die Verwendung von nichtaromatischen Harnstoffen als Beschleuniger in hitzehärtenden Epoxidharzzusammensetzungen, insbesondere für den Einsatz als Rohbauklebstoff und zur Herstellung von Strukturschäumen.

Es sind derzeit jedoch Bestrebungen im Markt im Gange, die Temperatur der KTL-Öfen abzusenken. Somit ist im Markt ein grosses Bedürfnis nach hitzehärtenden Epoxidharzzusammensetzungen vorhanden, welche auch bei tieferen Temperaturen, d.h. bei einer Temperatur von 130 bis 140°C, bereits nach kurzer Zeit, typischerweise 10 bis 15 Minuten, aushärten. Werden dafür zum Beispiel aromatische Harnstoffe eingesetzt, welche aufgrund ihrer Struktur bedeutend reaktiver sind, führt dies zu grossen Problemen in der Lagerstabilität der hitzehärtenden Epoxidharzzusammensetzungen. Es besteht deshalb ein Bedürfnis nach hitzehärtenden Epoxidharzzusammensetzungen, welche einerseits bei tieferen Temperaturen aushärten jedoch eine ausreichende Lagerstabilität aufweisen.

### Darstellung der Erfindung

Aufgabe der vorliegenden Erfindung ist es daher, hitzehärtende Epoxidharzzusammensetzungen zur Verfügung zu stellen, welche einerseits eine gute Lagerstabilität bei Raumtemperatur aufweisen und andererseits über eine schnelle Aushärtung bei Temperaturen von 130°C bis 140°C verfügen.

Diese Aufgabe konnte überraschenderweise durch eine hitzehärtende Epoxidharzzusammensetzung gemäss Anspruch 1 gelöst werden. Diese Epoxidharzzusammensetzung lassen sich besonders gut als einkomponentiger hitzehärtender Klebstoff, insbesondere als hitzehärtender einkomponentiger Rohbauklebstoff im Fahrzeugbau, verwenden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft einkomponentige hitzehärtende Epoxidharzzusammensetzungen, umfassend
a) mindestens ein Epoxidharz **A** mit durchschnittlich mehr als einer Epoxidgruppe pro Molekül;
b) mindestens einen Härter **B** für Epoxidharze, wobei es sich bei dem Härter **B** um ein Dihydrazid ausgewählt aus der Gruppe bestehend aus Glutarsäuredihydrazid, Adipinsäuredihydrazid und Pimelinsäuredihydrazid, vorzugsweise Adipinsäuredihydrazid handelt; und
c) mindestens einen Beschleuniger **C** der Formel (la) oder (Ib) 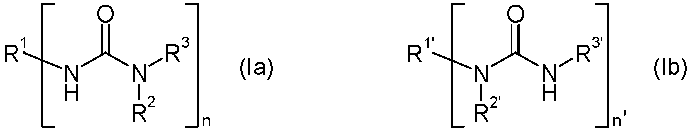
   wobei R¹ für H oder einen n-wertigen aliphatischen, cycloaliphatischen
   oder araliphatischen Rest steht;
   R² und R³
   entweder
      je unabhängig von einander für eine Alkylgruppe oder Aralkylgruppe stehen;
         oder
      zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist, stehen;
   R^{1'} für einen n'-wertigen aliphatischen, cycloaliphatischen oder araliphatischen Rest steht;
   R^{2'} für eine Alkylgruppe oder Aralkylgruppe oder Alkylengruppe steht;
   R^{3'} unabhängig von einander für H oder eine Alkylgruppe oder Aralkylgruppe steht; und
   n und n' je für einen Wert von 1 bis 4, insbesondere für 1 oder 2, steht.

Das Verhältnis des Anteils Epoxidgruppen des Epoxidharz **A** in mol / Anteil von Dihydrazid in mol beträgt 3 - 5, insbesondere 3.5 - 4.5.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "Raumtemperatur" wird im vorliegenden Dokument eine Temperatur von 23°C bezeichnet.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

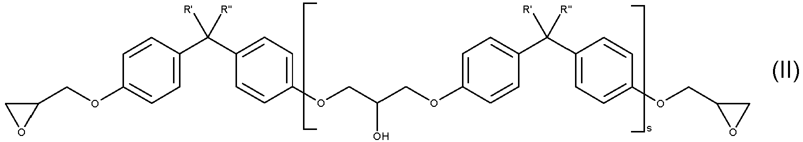

Hierbei stehen die Substituenten R' und R" unabhängig voneinander entweder für H oder CH₃.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite^{®} GY 250, Araldite^{®} PY 304, Araldite^{®} GY 282 (Huntsman) oder D.E.R.^{™} 331 oder D.E.R.^{™} 330 (Dow) oder Epikote 828 (Hexion) erhältlich.

Weiterhin geeignet als Epoxidharz **A** sind sogenannte Epoxid-Novolake. Diese weisen insbesondere die folgende Formel auf: 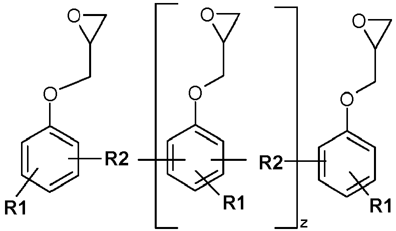 mit **R2=** 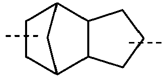 oder CH₂, **R1** = H oder Methyl und z = 0 bis 7.

Insbesondere handelt es sich hierbei um Phenol- oder Kresol-Epoxid-Novolake (**R2** = CH₂).

Solche Epoxidharze sind unter dem Handelnamen EPN oder ECN sowie Tactix^{®} von Huntsman oder unter der Produktereihe D.E.N.^{™} von Dow Chemical kommerziell erhältlich.

Bevorzugt stellt das Epoxidharz **A** ein Epoxid-Flüssigharz der Formel (II) dar.

In einer besonders bevorzugten Ausführungsform enthält die hitzehärtende Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Der Anteil von Epoxidharzes **A** beträgt vorzugsweise 10 - 60 Gew.-%, insbesondere 30 - 50 Gew.-%, bezogen auf das Gesamtgewicht der Epoxidharzzusammensetzung.

Weiter ist es vorteilhaft, wenn es sich bei 50-100 Gew.-%, insbesondere 80-100 Gew.-%, des Epoxidharzes **A** um ein vorgenanntes Epoxid-Flüssigharz handelt.

Weiter ist es vorteilhaft, wenn es sich bei 0-30 Gew.-%, insbesondere 0-20 Gew.-%, besonders bevorzugt 5-15 Gew.-%, des Epoxidharzes **A** um ein vorgenanntes Epoxid-Festharz handelt.

Die erfindungsgemässe Zusammensetzung enthält weiterhin als Härter **B** ein Dihydrazid ausgewählt aus der Gruppe bestehend aus Glutarsäuredihydrazid, Adipinsäuredihydrazid und Pimelinsäuredihydrazid. Vorzugsweise handelt es sich um Adipinsäuredihydrazid.

Das Verhältnis des Anteils Epoxidgruppen des Epoxidharz **A** in mol / Anteil von Dihydrazid in mol beträgt 3 - 5, insbesondere 3.5 - 4.5. Dies ist dahingehend von Vorteil, dass in diesem Bereich hohe Werte für die mechanischen Eigenschaften der ausgehärteten Zusammensetzung, insbesondere für E-modul und Zugfestigkeit, erhalten werden.

Vorzugsweise weist das Dihydrazid eine mittlere Partikelgrösse D₅₀ von ≤ 100 µm, ≤ 50 µm, 0.5 - 50 µm, 1 - 50 µm, 1 - 40 µm, insbesondere 1 - 20 µm, bevorzugt 2 - 20 µm, insbesondere bevorzugt 2 - 15 µm, auf.

Überraschenderweise wurde gefunden, dass dies in den erfindungsgemässen Zusammensetzungen zu einer Verbesserung der Haftung sowie zu einer Verbesserung der Schlagschälfestigkeit führt. Dies ist beispielsweise in der Tabelle 2 im Vergleich von E1 und E4 - E8 ersichtlich aufgrund besserer Zugscherfestigkeiten.

Der Begriff "mittlere Partikelgrösse" bezieht sich hier auf den D₅₀-Wert der kumulativen Volumenverteilungskurve, bei der 50 Vol.-% der Partikel einen Durchmesser aufweisen, der kleiner als der Wert ist. Die mittlere Partikelgrösse oder der D₅₀-Wert wird in der vorliegenden Erfindung durch Laserdiffraktometrie bestimmt.

Im vorliegenden Dokument bezeichnen z.B. D₁₀, D₅₀, D₉₀ und D₉₈ diejenigen Durchmesser, bei denen 10 Vol.-%, 50 Vol.-% ("mittlere Partikelgrösse"), 90 Vol.-% beziehungsweise 98 Vol.-% der Partikel einen kleineren Durchmesser haben, bestimmt durch Laserdiffraktiometrie.

Weiter ist es vorteilhaft, wenn die hitzehärtende Epoxidharzzusammensetzung möglichst wenig Dicyandiamid aufweist. Falls die Epoxidharzzusammensetzung Dicyandiamid aufweist beträgt das Gewichtsverhältnis von Dihydrazid zu Dicyandiamid ≥ 0.5, ≥ 0.75, ≥ 1, ≥ 2, ≥ 5, insbesondere ≥ 10, vorzugsweise ≥ 50, besonders bevorzugt ≥ 100.

Vorzugsweise beträgt die Menge an Dicyandiamid weniger als 5 Gew.-%, weniger als 3 Gew.-%, weniger als 2 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, bezogen auf das Gesamtgewicht der Epoxidharzzusammensetzung. Besonders bevorzugt weist die hitzehärtende Epoxidharzzusammensetzung kein Dicyandiamid auf.

Beispielsweise in Tabelle 2 im Vergleich von E1 mit E3 ersichtlich, dass dies zu einer Verbesserung der Lagerstabilität führt, insbesondere bei einer Lagerung bei 60°C für eine Woche, sowie höhere Zugscherfestigkeits- und Impact-Peel-Werten erreicht werden.

Weiter wurde gefunden, dass Zusammensetzungen, welche Dicyandiamid anstelle von den erfindungsgemässen Dihydraziden aufweisen, ob in Kombination mit Harnstoffen oder nicht, bei Aushärtungstemperaturen von 130 - 140°C nicht aushärten. Dies ist beispielsweise in Tabelle 2 im Vergleich von E1 und E2 mit R4 - R8 ersichtlich.

Die erfindungsgemässe Zusammensetzung enthält weiterhin
c) mindestens einen Beschleuniger **C** der Formel (la) oder (Ib) 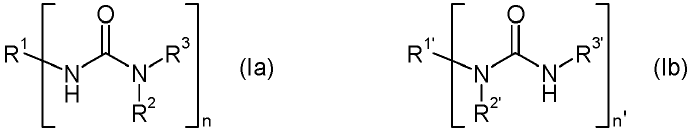
wobei R¹ für H oder einen n-wertigen aliphatischen, cycloaliphatischen
oder araliphatischen Rest steht;
R² und R³
entweder
   je unabhängig von einander für eine Alkylgruppe oder Aralkylgruppe stehen;
      oder
   zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist, stehen;
   R^{1'} für einen n'-wertigen aliphatischen, cycloaliphatischen oder araliphatischen Rest steht;
   R^{2'} für eine Alkylgruppe oder Aralkylgruppe oder Alkylengruppe steht;
   R^{3'} unabhängig von einander für H oder eine Alkylgruppe oder Aralkylgruppe steht; und
   n und n' je für einen Wert von 1 bis 4, insbesondere für 1 oder 2, steht.

Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Es ist wesentlich für die Erfindung, dass, falls R¹ nicht für H steht, R¹ für einen n-wertigen aliphatischen, cycloaliphatischen oder araliphatischen Rest und nicht für einen aromatischen oder heteroaromatischen Rest steht. D.h. der Beschleuniger **C** weist insbesondere nicht die Formel (I') auf.

Ebenso ist es wesentlich, dass, falls R^{3'} nicht für H steht, R^{3'} nicht für einen aromatischen oder heteroaromatischen Rest steht, d.h. der Beschleuniger **C** insbesondere nicht die Formel (I") aufweist. 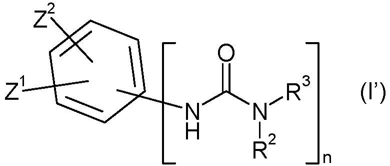 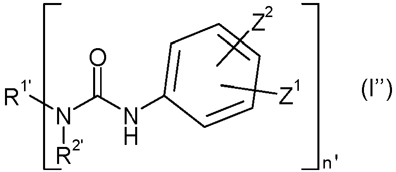 wobei Z¹ und Z² für H oder einen beliebigen organischen Rest stehen.

Es hat sich gezeigt, dass Beschleuniger mit aromatischen Resten R¹ nicht lagerstabil sind, das heisst, sie erhöhen die Viskosität von hitzehärtenden Epoxidharzzusammensetzungen innert kurzer Zeit zu einem für die Handhabung der Zusammensetzung nicht mehr vernachlässigbaren Ausmass.

Dies ist beispielsweise in der Tabelle 2 im Vergleich der Lagerstabilitäten von einer Woche bei 60°C von E1 und E2 mit R2 und R3 ersichtlich.

R¹ steht insbesondere für einen Rest eines aliphatischen, cycloaliphatischen oder araliphatischen Mono-, Di-, Tri- oder Tetraisocyanates der Formel (III) nach Entfernung der n Isocyanatgruppen.

R¹[NCO]ₙ (III)

Dieses Mono- Di- Tri- oder Tetraisocyanat der Formel (III) ist entweder ein monomeres Mono-, Di-, Tri- oder Tetraisocyanat oder ein Dimer oder Oligomer eines oder mehrerer monomeren Di- oder Triisocyanates, wobei als Dimer oder Oligomer insbesondere Biurete, Isocyanurate und Uretdione gelten.

Geeignete monomere Monoisocyanate sind Alkylisocyanate, wie beispielsweise Butylisocyanat, Pentylisocyanat, Hexylisocyanat, Octylisocyanat, Decylisocyanat und Dodecylisocyanat, sowie Cyclohexylisocyanat, Methylcyclohexylisocyanat sowie Benzylisocyanat.

Besonders geeignete monomere Diisocyanate sind 1,4-Butandiisocyanat, Hexamethylendiisocyanat (HDI), Isophorondiisocyanat (IPDI), Trimethylhexamethylendiisocyanat (TMDI), 2,5- oder 2,6-Bis-(isocyanatomethyl)-bicyclo[2.2.1] heptan, Dicyclohexylmethyldiisocyanat (H₁₂MDI), m-Tetramethylxylylen diisocyanat (TMXDI) und m-Xylylendiisocyanat (XDI) und hydriertes m-Xylylendiisocanat (H₈XDI).

Besonders geeignete Dimere oder Oligomere sind HDI-Biuret, HDI-Isocyanurat, IPDI-Biuret, IPDI-Isocyanurat, HDI-Diuretdion, IPDI-Isocyanurat,

Derartige Dimere oder Oligomere sind kommerziell beispielsweise erhältlich als Desmodur N-100 (Bayer), Luxate HDB 9000 (Lyondell), Desmodur N-3300 (Bayer), Desmodur N-3600 (Bayer), Luxate HT 2000 (Lyondell), Desmodur N-3400 (Bayer), Luxate HD 100 (Lyondell), Desmodur Z 4470 (Bayer), Vestanat T 1890/100 (Hüls) oder Luxate IT 1070 (Lyondell).

Selbstverständlich können auch geeignete Mischungen von den genannten Di- oder Triisocyanaten eingesetzt werden.

R¹ steht insbesondere
entweder
   für eine Alkylengruppe mit 4 bis 10 Kohlenstoffatomen, insbesondere für eine Hexamethylengruppe,
oder für 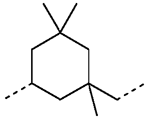
oder
   für ein Biuret oder ein Isocyanurat eines aliphatischen oder araliphatischen Diisocyanates, nach Entfernung der Isocyanatgruppen;
oder
   für eine Xylylengruppe, insbesondere für eine m-Xylylengruppe.

Besonders bevorzugt als R¹ wird HDI, IPDI, HDI-Biuret sowie XDI, besonders bevorzugt IPDI, nach Entfernung der NCO-Gruppen.

R² und R³ können zusammen eine Butylen-, Pentamethylen- oder Hexamethylengruppe, vorzugsweise eine Pentamethylengruppe, bilden.

Besonders bevorzugt stehen R² und R³ unabhängig voneinander je für eine Alkylgruppe mit 1 bis 5 Kohlenstoffatomen, insbesondere je unabhängig voneinander je für eine Methyl-, Ethyl- oder Propyl-Gruppe, vorzugsweise je für eine Methylgruppe.

R¹ steht in einer besonders bevorzugten Ausführungsform für H. Dies ist bevorzugt in dem Fall, wo R² und R³ unabhängig voneinander je für eine Methyl-, Ethyl- oder Propyl-Gruppe, vorzugsweise je für je für eine Methylgruppe, stehen.

R¹ steht weiter bevorzugt für einen n-wertigen aliphatischen, cycloaliphatischen oder araliphatischen Rest.

R^{1'} steht einerseits insbesondere für ein Diamin, welches ausgewählt ist aus der Gruppe bestehend aus 1,4-Diaminobutan, Hexamethylendiamin, Isophorondiamin, Trimethylhexamethylendiamin, 2,5- oder 2,6-Bis-(aminomethyl)-bicyclo[2.2.1] heptan, Dicyclohexylmethyldiamin, m-Tetramethylxylylen diamin und m-Xylylendiamin, hydriertes m-Xylylendiamin, Ethylendiamin, 1,3-Propandiamin und 1,2-Propandiamin, nach der Entfernung der zwei Aminogruppen.

R^{2'} steht einerseits insbesondere für einen C₁-C₁₀-Alkylrest oder einen Aralkylrest mit 7 bis 20 C-Atomen, bevorzugt für eine Methyl-, Ethyl-, Propyl-, Butyl- oder Pentylgruppe.

R^{1'} steht andererseits insbesondere für eine Ethylen-, Propylen-, Butylen-, Methylethylen- oder 1,2-Dimethylethylen-Gruppe.

R^{2'} steht andererseits insbesondere für eine Ethylen-, Propylen-, Butylen-, Methylethylen- oder 1,2-Dimethylethylen-Gruppe.

Die zwei Alkylengruppen R^{1'} und R^{2'} bilden zusammen mit den Harnstoff-Stickstoffatomen einen Ring, insbesondere Piperazin oder 2,3,5,6-Tetramethylpiperazin oder Homopiperazin (1,4-Diazacycloheptan).

R^{3'} steht insbesondere für ein monomeres Monoisocyanat, welches ausgewählt ist aus der Gruppe bestehend aus Butylisocyanat, Pentylisocyanat, Hexylisocyanat, Octylisocyanat, Decylisocyanat und Dodecylisocyanat, sowie Cyclohexylisocyanat, Methylcyclohexylisocyanat und Benzylisocyanat.

Die Beschleuniger **C** der Formel (la) sind synthetisch leicht aus der Reaktion eines aliphatischen, cycloaliphatischen oder araliphatischen Mono-, Di-, Tri- oder Tetraisocyanates der Formel (III) mit einem sekundären Amin der Formel (IV) zugänglich.

R¹[NCO]ₙ (III)

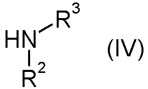

In einer zweiten Variante der Synthese wird der Beschleuniger **C** der Formel (la) sie aus der Reaktion eines primären aliphatischen, cycloaliphatischen oder araliphatischen Amines der Formel (V) und einer Verbindung der Formel (VI) hergestellt.

R¹[NH₂]ₙ (V)

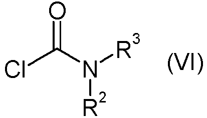

Letztere Variante ist insbesondere dann vorteilhaft wenn Polyisocyanate der Formel (III) kommerziell nicht oder nur schwer erhältlich sind.

Die Beschleuniger **C** der Formel (Ib) sind synthetisch leicht aus der Reaktion eines aliphatischen, cycloaliphatischen oder araliphatischen Monoisocyanates der Formel (IIIa) mit einem sekundären Amin der Formel (IVa) oder (IVb) zugänglich.

R^{3'}NCO (IIIa)

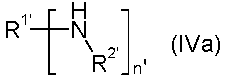

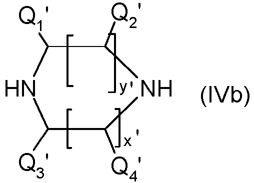

In Formel (IVb) steht x' und y' je unabhängig voneinander für die Werte 1, 2, 3, 4 oder 5 und die Substituenten Q^{1'}, Q^{2'}, Q^{3'} und Q^{4'} stehen unabhängig von einander je für H oder für eine C₁- bis C₅-Alkylgruppe. Bevorzugt stehen x' und y' für 1 oder 2, bevorzugt je 1, d.h. Das sekundäre Amin der Formel (IVb) ist bevorzugt Piperazin oder 2,3,5,6-Tetramethylpiperazin oder Homopiperazin (1,4-Diazacycloheptan), besonders bevorzugt Piperazin oder 2,3,5,6-Tetramethylpiperazin.

Die sekundären Amine der Formel (IVa) lassen sich ihrerseits insbesondere leicht aus der Alkylierung von primären Aminen der Formel R^{1'}[NH₂]_{n'} herstellen.

Besonders bevorzugte Amine der Formel (IVa) sind ausgewählt aus der Gruppe bestehend aus N,N'-Dimethyl-1,2-Diaminocyclohexan, N,N'-Dimethylethylendiamin, N,N'-Dimethyl-1,3-propandiamin, Bis-Isopropyliertes IPDA (Jefflink-754 (Huntsman)), N,N'-Diisobutyl-ethylendiamin und N-Ethyl-N'-methyl-ethylendiamin.

Am meisten bevorzugt handelt es sich bei dem mindestens einen Beschleuniger **C** um einen Beschleuniger der Formel (la), wobei insbesondere:
- R¹ für H steht und R² und R³ je für eine Methyl-, Ethyl- oder Propylgruppe, bevorzugt je für eine Methylgruppe, stehen und n = 1 ist,
   und/oder
- R¹ für 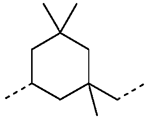 steht und R² und R³ je für eine Methyl-, Ethyl- oder Propylgruppe, bevorzugt je für eine Methylgruppe, stehen, und n = 2 ist.

Der Beschleuniger **C** weist insbesondere ein Molekül von weniger als 1000 g/mol, insbesondere zwischen 80 und 800 g/mol auf. Ist das Molekulargewicht grösser ist die Beschleunigungswirkung reduziert und die notwendige Einsatzmenge ist bedeutend höher, was wiederum zu schlechter Mechanik führen kann.

Die Menge des Beschleunigers **C** beträgt vorteilhaft 0.01 - 6.0 Gew.-%, insbesondere 0.02 - 4.0 Gew.-%, bevorzugt 0.02 - 2.0 Gew.-%, bezogen auf das Gewicht des Epoxidharzes **A.**

Das Verhältnis des Anteils Beschleuniger **C** in Gramm pro mol Epoxidgruppen des Epoxidharz **A** beträgt vorzugsweise von 0.01 - 0.5 g/mol Epoxidgruppen, insbesondere 0.05 - 0.3 g/mol Epoxidgruppen, besonders bevorzugt 0.075 - 0.2 g/mol Epoxidgruppen, am meisten bevorzugt 0.08 - 0.15 g/mol Epoxidgruppen. Dies ist dahingehend von Vorteil, dass in diesem Bereich eine hohe Lagerstabilität bei gleichzeitig guten mechanischen Werten und guter Haftung bei einer Aushärtung bei Temperaturen von 130 - 150 °C erhalten wird.

Die einkomponentige hitzehärtende Epoxidharzzusammensetzung enthält vorzugsweise mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1,** Flüssigkautschuken **D2** und Core-Shell-Polymeren **D3.** Bevorzugt ist der Zähigkeitsverbesserer **D** ausgewählt ist aus der Gruppe bestehend aus endständig blockierten Polyurethanpolymeren **D1** und Flüssigkautschuken **D2.** Besonders bevorzugt handelt es sich um ein endständig blockiertes Polyurethanpolymer **D1.**

Handelt es sich bei dem Zähigkeitsverbesserer **D** um ein endständig blockiertes Polyurethanpolymer **D1.**

Vorzugsweise handelt es sich um ein endständig blockiertes Polyurethanpolymer **D1** blockiert mit einer Blockierungsgruppe, welche sich bei einer Temperatur über 100°C abspaltet.

Als Blockierungsgruppe bevorzugt sind insbesondere einerseits Phenole oder Bisphenole zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Die Herstellung des endständig blockierten Polyurethanprepolymers erfolgt aus einem Isocyanatgruppen terminierten linearen oder verzweigten Polyurethanprepolymer mit einer oder mehreren Isocyanat-reaktiven Verbindungen. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppen, lässt sich aus mindestens einem Diisocyanat oder Triisocyanat sowie aus einem Polymeren Q_{PM} mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCOreaktiver Gruppen auf.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

In einer bevorzugten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Bei dem Zähigkeitsverbesserer D kann es sich um einen Flüssigkautschuk **D2** handeln. Hierbei kann es sich z.B. um ein carboxyl- oder epoxidterminiertes Polymer handeln.

In einer ersten Ausführungsform kann dieser Flüssigkautschuk ein carboxyl- oder epoxidterminiertes Acrylnitril/Butadien-Copolymer oder ein Derivat davon sein. Derartige Flüssigkautschuke sind z.B. unter dem Namen Hypro / Hypox^{®} CTBN und CTBNX und ETBN von Emerald Perfomance Materials, kommerziell erhältlich. Als Derivate sind insbesondere Epoxidgruppen aufweisende Elastomer-modifizierte Prepolymere, wie sie unter der Produktlinie Polydis^{®}, insbesondere aus der Produktelinie Polydis^{®} 36.., von der Firma Struktol^{®} (Schill+Seilacher Gruppe, Deutschland) oder unter der Produktlinie Albipox (Evonik, Deutschland) kommerziell vertrieben werden, geeignet.

In einer zweiten Ausführungsform kann dieser Flüssigkautschuk ein Polyacrylatflüssigkautschuk sein, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow erhältlich.

Es können natürlich auch Mischungen von Flüssigkautschuken verwendet werden, insbesondere Mischungen von carboxyl- oder epoxidterminierten Acrylnitril/Butadien-Copolymeren oder von Derivaten davon.

Der Zähigkeitsverbesserer **D** kann in einer dritten Ausführungsform ein Core-Shell Polymer **D3** sein. Core-Shell-Polymere bestehen aus einem elastischen Kernpolymer und einem starren Schalen-Polymer. Besonders geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength^{™} von Arkema, Paraloid^{™} von Dow oder F-351^{™} von Zeon erhältlich sind.

Vorzugsweise beträgt der Anteil an:
Zähigkeitsverbesserer **D1** 10-60 Gew.-%, insbesondere 20-30 Gew.-%;
Zähigkeitsverbesserer **D2** 10-30 Gew.-%, insbesondere 20-30 Gew.-%:
Zähigkeitsverbesserer **D3** 10-30 Gew.-%, insbesondere 20-30 Gew.-%;
   bezogen auf das Gesamtgewicht der Epoxidharzzusammensetzung.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Besonders bevorzugt handelt es sich um Füllstoffe ausgewählt aus der Gruppe bestehend aus Calciumcarbonat, Calciumoxid und pyrogene Kieselsäuren.

Vorteilhaft beträgt der Gesamtanteil des gesamten Füllstoffs **F** 5 - 40 Gewichts-%, vorzugsweise 10 - 30 Gewichts-%, bezogen auf das Gesamtgewicht der Epoxidharzzusammensetzung.

In einer weiteren bevorzugten Ausführungsform kann die Zusammensetzung ein physikalisches oder chemisches Treibmittel enthalten, wie es beispielsweise unter dem Handelsnamen Expancel^{™} der Firma Akzo Nobel oder Celogen^{™} der Firma Chemtura oder unter dem Handelsnamen Luvopor^{®} von Lehmann & Voss erhältlich ist. Der Anteil des Treibmittels beträgt vorteilhaft 0.1 - 3 Gew.-%, bezogen auf Gesamtgewicht der Epoxidharzzusammensetzung.

In einer weiteren bevorzugten Ausführungsform enthält die Zusammensetzung zusätzlich mindestens einen Epoxidgruppen-tragenden Reaktivverdünner **G.** Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll^{®} bzw. Dellatol BBS von Bayer kommerziell erhältlich sind.

Als Stabilisatoren eignen sich insbesondere gegebenenfalls substituierte Phenole, wie BHT oder Wingstay^{®} T (Elikem), sterisch gehinderte Amine oder N-Oxylverbindungen wie TEMPO (Evonik).

Eine besonders bevorzugte einkomponentige Epoxidharzzusammensetzung umfasst:
- 10 - 60 Gew.-%, insbesondere 30 - 50 Gew.-%, bezogen auf das Gesamtgewicht der Epoxidharzzusammensetzung, Epoxidharz **A** mit durchschnittlich mehr als einer Epoxidgruppe pro Molekül; vorzugsweise handelt es sich bei 50-100 Gew.-%, insbesondere 80-100 Gew.-%, des Epoxidharzes **A** um ein Epoxid-Flüssigharz und bei 0-30 Gew.-%, insbesondere 0-20 Gew.-%, besonders bevorzugt 5-15 Gew.-%, des Epoxidharzes **A** um ein Epoxid-Festharz;.
- Härter **B,** vorzugsweise Adipinsäuredihydrazid;
- mindestens einen Beschleuniger **C** der Formel (la) oder (Ib), insbesondere der Formel (la), wobei insbesondere:
   - R¹ für H steht und R² und R³ je für eine Methyl-, Ethyl- oder Propylgruppe, bevorzugt je für eine Methylgruppe, stehen und n = 1 ist, und/oder
   - R¹ für 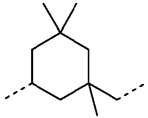 steht und R² und R³ je für eine Methyl-, Ethyl- oder Propylgruppe, bevorzugt je für eine Methylgruppe, stehen, und n = 2 ist;
   - vorzugsweise mindestens einen Zähigkeitsverbesserer **D,** ausgewählt ist aus der Gruppe bestehend aus endständig blockierten Polyurethanpolymeren **D1,** Flüssigkautschuken **D2** und Core-Shell-Polymeren **D3,** vorzugsweise beträgt dabei der Anteil an:
      Zähigkeitsverbesserer **D1** 10-60 Gew.-%, insbesondere 20-30 Gew.-%;
      Zähigkeitsverbesserer **D2** 10-30 Gew.-%, insbesondere 20-30 Gew.-%:
      Zähigkeitsverbesserer **D3** 10-30 Gew.-%, insbesondere 20-30 Gew.-%;
      bezogen auf das Gesamtgewicht der Epoxidharzzusammensetzung;
   - vorzugsweise 5 - 50 Gewichts-%, vorzugsweise 10 - 30 Gewichts-%, bezogen auf das Gesamtgewicht der Epoxidharzzusammensetzung, von einem Füllstoffe **F** ausgewählt aus der Gruppe bestehend aus Calciumcarbonat, Calciumoxid und pyrogene Kieselsäuren;
   - vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der Epoxidharzzusammensetzung, von einen Epoxidgruppen-tragenden Reaktivverdünner **G.**

Das Verhältnis des Anteils Beschleuniger **C** in Gramm pro mol Epoxidgruppen des Epoxidharz **A** beträgt vorzugsweise von 0.01 - 0.5 g/mol Epoxidgruppen, insbesondere 0.05 - 0.3 g/mol Epoxidgruppen, besonders bevorzugt 0.075 - 0.2 g/mol Epoxidgruppen, am meisten bevorzugt 0.08 - 0.15 g/mol Epoxidgruppen.

Das Verhältnis des Anteils Epoxidgruppen des Epoxidharz **A** in mol / Anteil von Dihydrazid in mol beträgt 3 - 5, insbesondere 3.5 - 4.5.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Ein Beispiel einer besonders bevorzugten Zusammensetzung ist E1 in Tabelle 1.

Es ist vorteilhaft, wenn die erfindungsgemässe Epoxidharzzusammensetzung eine Viskosität bei 25°C von 500 - 3000 Pa*s, insbesondere 1000 - 2500 Pa*s, vorzugsweise 1000 - 2000 Pa*s, aufweist. Dies ist dahingehend von Vorteil, dass dadurch eine gute Applizierbarkeit gewährleistet ist.

Auch ist es von Vorteil, wenn bei der erfindungsgemässen Epoxidharzzusammensetzung die Viskosität gemessen bei einer Messtemperatur von 25°C, nach einer Lagerung von 1 Woche bei 60°C einen Tag nach Herstellung, um weniger als 500%, um weniger als 300%, um weniger als 200%, weniger als 150%, weniger als 120%, weniger als 100%, weniger als 50%, ansteigt.

Es hat sich gezeigt, dass sich die beschriebenen hitzehärtenden Epoxidharzzusammensetzungen besonders zur Verwendung als einkomponentige hitzehärtende Klebstoffe, insbesondere als hitzehärtender einkomponentiger Rohbauklebstoff im Fahrzeugbau, eignen. Ein derartiger einkomponentiger Klebstoff weist breite Einsatzmöglichkeiten auf. Solche Klebstoffe werden für das Verkleben von hitzestabilen Materialien benötigt. Unter hitzestabilen Materialien werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit und tiefer Härtungstemperatur zu erreichen.

Ein solcher Klebstoff wird insbesondere zuerst mit den zu verklebenden Materialien bei einer Temperatur von zwischen 10°C und 80°C, insbesondere zwischen 10°C und 60°C, kontaktiert und später ausgehärtet bei einer Temperatur von typischerweise 130 - 220°C, vorzugsweise 130 - 180°C, besonders bevorzugt 130 - 150°C.

Ein weiterer Aspekt der vorliegenden Erfindung betrifft ein Verfahren zur Verklebung von hitzestabilen Substraten, welches die Schritte umfasst:
i) Applizieren einer hitzehärtenden Epoxidharzzusammensetzung, wie sie vorgängig im Detail beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 100 - 220°C, insbesondere von 120 - 200°C, bevorzugt zwischen 130 und 150°C, besonders bevorzugt zwischen 130 und 140°C.

Das Substrat **S2** besteht hierbei aus dem gleichen oder einem unterschiedlichen Material wie das Substrat **S1.**

Die Substrate **S1** und/oder **S2** sind insbesondere die vorgängig erwähnten Metalle und Kunststoffe.

Vorzugsweise wird in dem Schritt iii) Erhitzen der Zusammensetzung auf eine Temperatur von 100 - 220°C, insbesondere von 120 - 200°C, bevorzugt zwischen 130 und 150°C besonders bevorzugt zwischen 130 und 140°C, die Zusammensetzung für 10 min - 6 h, 10 min - 2 h, 10 min - 60 min, 10 min - 30 min, 10 min - 20 min, besonders bevorzugt 10 min - 15 min, bei der vorgenannten Temperatur belassen.

Aus einem derartigen Verfahren zum Verkleben von hitzestabilen Materialien resultiert ein verklebter Artikel. Ein derartiger Artikel ist vorzugsweise ein Fahrzeug oder ein Teil eines Fahrzeugs.

Einen weiteren Aspekt der vorliegenden Erfindung betrifft daher ein verklebter Artikel erhalten aus dem vorgenannten Verfahren. Selbstverständlich können mit einer erfindungsgemässen Zusammensetzung neben hitzehärtenden Klebstoffen auch Dichtmassen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender einkomponentiger Rohbauklebstoff im Fahrzeugbau oder als Versteifungsmasse oder als schäumbare, hitzehärtende Zusammensetzung für die Verstärkung in Hohlräumen von strukturellen Bauteilen und Verstärkungselementen.

Einen weiteren Aspekt der vorliegenden Erfindung betrifft eine ausgehärtete Epoxidharzzusammensetzung, wie sie durch Erhitzen einer hitzehärtenden Epoxidharzzusammensetzung wie sie vorgängig im Detail beschrieben wurde, erhalten wird. Die Erhitzung erfolgt typischerweise in einem Ofen bei einer Temperatur von 100 - 220°C, bevorzugt zwischen 130 und 150°C besonders bevorzugt zwischen 130 und 140°C, vorzugsweise für 10 min - 6 h, 10 min - 2 h, 10 min - 60 min, 10 min - 30 min, 10 min - 20 min, besonders bevorzugt 10 min - 15 min, bei der vorgenannten Temperatur.

Es hat sich gezeigt, dass die erfindungsgemässen Beschleuniger **C,** wie sie vorgängig als Bestandteil einer hitzehärtenden Epoxidharzzusammensetzung bereits im Detail beschrieben worden sind, sich in Kombination mit den erfindungsgemässen Härtern **B** als Beschleuniger für hitzehärtende Epoxidharzzusammensetzungen bei Aushärtungstemperaturen insbesondere zwischen 130 und 150°C eignen.

Überraschenderweise wurde gefunden, dass andere Beschleuniger für hitzehärtende Epoxidharzzusammensetzungen die Anforderung der Beschleunigung bei tiefen Temperaturen bei gleichzeitiger Lagerstabilität nicht erfüllen. So ist beispielsweise in Tabelle 2 ersichtlich, dass beispielsweise bei der Verwendung von Diuron oder 1,1'-(methylenebis(4,1-phenylene))bis(3,3-dimethylurea) die Lagerstabilität der entsprechenden Epoxidharzzusammensetzung nach einer Woche bei 60 °C derart stark verschlechtert wird, dass die Zusammensetzungen aushärten. Dies ist beispielsweise im Vergleich von E1 und E2 mit R2 und R3 ersichtlich.

Besonders überraschend war, dass die Vergleichszusammensetzung R1 ohne Beschleuniger eine grössere Viskositätserhöhung nach einer Woche bei 60 °C aufweist als die Zusammensetzungen E1 und E2, welche einen Beschleuniger C enthalten.

Weiter ist aus dem Vergleich der Zusammensetzungen E1 und E2 mit den Zusammensetzungen R4 - R8 in Tabelle 2 ersichtlich, dass die Vergleichszusammensetzung, welche nur Dicyandiamid als Härter enthalten, bei den Aushärtungsbedingungen für die Messung der Zugscherfestigkeit bei 140°C für 10 min nicht aushärten und daher für eine Verwendung, ob ohne oder mit Beschleuniger, nicht geeignet sind.

### Beispiele

Im Folgenden werden einige Beispiele aufgeführt, welche die Erfindung weiter veranschaulichen, den Umfang der Erfindung aber in keiner Weise beschränken sollen.

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer ***D-1*** verwendet.

| A-Harz flüssig | Epoxid-Flüssigharz, D.E.R. 331 (Bisphenol-A-diglycidylether), Dow |
|---|---|
| A-Harz fest | Epoxid-Festharz, (Bisphenol-A-diglycidylether-basiert), Dow |
| B1 | Adipinsäuredihydrazid, Technicure ADH-J (mittlere Partikelgrösse D₅₀ von 2.4 µm), A&C Catalysts Inc. |
| B2 | Adipinsäuredihydrazid, Technicure ADH (mittlere Partikelgrösse D₅₀ von 15 µm), A&C Catalysts Inc. |
| B3 | Adipinsäuredihydrazid, ESIM ADH (mittlere Partikelgrösse D₅₀ von 18 µm), ESIM Chemicals |
| B4 | Adipinsäuredihydrazid, Innochem ADH (mittlere Partikelgrösse D₅₀ von 22 µm), Innochem |
| B5 | Adipinsäuredihydrazid, Harke ADH (mittlere Partikelgrösse D₅₀ von 32.5 µm), Harke |
| B6 | Adipinsäuredihydrazid, Novasol ADH (mittlere Partikelgrösse D₅₀ von 42 µm), Novasol Chemie GmbH |
| C1 | N,N-Dimethylharnstoff (=1,1-Dimethylharnstoff), n = 1, R¹ = H, R² = R³ = CH₃, Sigma-Aldrich, Schweiz |
| C2 | 3-(5-(3,3-dimethylureido)-1,3,3-trimethylcyclohexyl)-N, N- |
| | dimethylpropanamid (=Dyhard UR800), |
| | n = 2, R¹ = 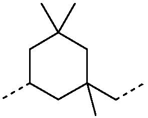 R² = R³ = CH₃ |
| | 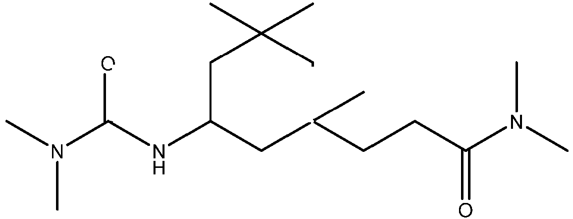 |
| C3 | Diuron, (3-(3,4-dichlorophenyl)-1,1-dimethylharnstoff, Sigma-Aldrich, Schweiz |
| C4 | 1,1'-(methylenebis(4,1-phenylene))bis(3,3-dimethylurea) |
| Dicy | Dicyandiamid, Dyhard 100SF (mittlere Partikelgrösse D₅₀ von 2-3 µm), AlzChem |
| Füllstoff | Gemisch aus Calciumcarbonat, Calciumoxid, pyrogene Kieselsäure |
| | Poly-THF 2000 (Difunktionelles Polybutylenglykol) (OH-Equivalentgewicht = ca. 1000 g/OH-Equivalent), BASF |
| | Liquiflex H (Hydroxylterminertes Polybutadien) (OH-Equivalentgewicht = ca. 1230 g/OH-Equivalent), Krahn |
| | Isophoron-diisocyanat (= *"IPDI"*), Evonik |
| | Cardolite NC-700 (Cardanol, meta-substituiertes Alkenyl-mono-Phenol), Cardolite |

Eingesetzte Rohstoffe.

### Herstellung der Zusammensetzungen

Es wurden gemäss Angaben in der Tabelle 1 die Referenzzusammensetzungen R1 - R9 sowie die erfindungsgemässen Zusammensetzungen E1 bis E7 hergestellt. Die Mengenangaben in der Tabelle 1 sind in Gewichtsteilen.

Das Verhältnis des Anteils Epoxidgruppen des Epoxidharz **A** in mol / Anteil von Dihydrazid in mol wird in der Tabelle 1 "B-Index" genannt und in [mol EP-Gruppen / mol Dihydrazid] angegeben.

Das Verhältnis des Anteils Beschleuniger **C** in Gramm pro mol Epoxidgruppen des Epoxidharz **A** wird in der Tabelle 1 "C-Index" genannt und in [g Beschleuniger / mol EP-Gruppen] angegeben.

### Prüfmethoden:

### E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Das E-Modul 0,05-0,25%, wurde gemäss DIN EN ISO 527 bestimmt.

### Zugscherfestigkeit (ZSF) (DIN EN 1465)

Gereinigte und mit Anticorit PL 3802-39S rückbeölte Prüfbleche von Stahl Elo H420 (Dicke 1,5mm) wurden auf einer Klebfläche von 25 x 10mm mit Glaskugeln als Abstandshalter in einer Schichtdicke von 0,3 mm mit dem Klebstoff verklebt und für 10 min bei 140°C Ofentemperatur ausgehärtet.

Die Zugscherfestigkeit wurde auf einer Zugmaschine bei einer Zuggeschwindigkeit von 10mm/min in einer 3-fach Bestimmung gemäss DIN EN 1465 bestimmt.

### Schlagschälfestigkeit/Impact peel (IP RT) (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Proben wurden für 10 min bei 140°C Ofentemperatur ausgehärtet. Die Messung der Schlagschälfestigkeit erfolgte bei 23°C als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Viskosität/Lagerstabilität Klebstoffe

Viskositätsmessungen an den Klebstoffen erfolgten 1d nach Herstellung auf einem Rheometer vom Typ MCR 101 des Herstellers Anton Paar oszillatorisch unter Verwendung einer Platten-Platten Geometrie bei einer Temperatur von 25°C mit folgenden Parametern: 5 Hz, 1 mm Spalt, Plattendurchmesser 25 mm, 1% Deformation. Die Messung wird in Tabelle 2 unter "Visko initial 25°C" ausgewiesen.

Zur Bewertung der Lagerstabilität der Klebstoffe wurde die Viskositätsmessung nach Lagerung bei der angegebenen Temperatur für eine angegebene Zeit in Wochen wiederholt und der sich nach der Lagerung ergebende prozentuale Viskositätsanstieg ermittelt. Die gemessene Viskosität in Pa*s gemessen bei einer Temperatur von 25°C nach einer Lagerung für 1 Woche bei 50°C, respektive 60°C, wird in Tabelle 2 unter "Visko 1W 50 25°C", respektive "Visko 1W 60 25°C" ausgewiesen. Der Wert in Klammern zeigt den prozentualen Viskositätsanstieg.

**Tabelle 1**

| | **R1** | **E1** | **E2** | **R2** | **R3** | **R4** | **R5** | **R6** | **R7** | **R8** | **R9** | **E1** | **E3** | **E4** | **E5** | **E6** | **E7** |
|---|---|---|---|---|---|---|---|---|---|---|---|---|---|---|---|---|---|
| A-Harz flüssig | 32.5 | 32.5 | 32.5 | 32.5 | 32.5 | 32.5 | 32.5 | 32.5 | 32.5 | 32.5 | 32.5 | 32.5 | 32.5 | 32.5 | 32.5 | 32.5 | 32.5 |
| A-Harz fest | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| D1 | 12.00 | 12.00 | 12.00 | 12.00 | 12.00 | 12.00 | 12.00 | 12.00 | 12.00 | 12.00 | 12.00 | 12.00 | 12.00 | 12.00 | 12.00 | 12.00 | 12.00 |
| Dicy | | | | | | 2.87 | 2.87 | 2.87 | 2.87 | 2.87 | 1.44 | | | | | | |
| C1 | | 0.02 | | | | | 0.02 | | | | 0.02 | 0.02 | 0.02 | 0.02 | 0.02 | 0.02 | 0.02 |
| C2 | | | 0.01 | | | | | 0.01 | | | | | | | | | |
| C3 | | | | 0.02 | | | | | 0.02 | | | | | | | | |
| C4 | | | | | 0.01 | | | | | 0.01 | | | | | | | |
| B1 | 8.19 | 8.19 | 8.19 | 8.19 | 8.19 | | | | | | | 8.19 | | | | | |
| B2 | | | | | | | | | | | 4.10 | | 8.19 | | | | |
| B3 | | | | | | | | | | | | | | 8.19 | | | |
| B4 | | | | | | | | | | | | | | | 8.19 | | |
| B5 | | | | | | | | | | | | | | | | 8.19 | |
| B6 | | | | | | | | | | | | | | | | | 8.19 |
| Füllstoffe | 44.54 | 44.54 | 44.54 | 44.54 | 44.54 | 44.54 | 44.54 | 44.54 | 44.54 | 44.54 | 44.54 | 44.54 | 44.54 | 44.54 | 44.54 | 44.54 | 44.54 |
| Summe: | 101.73 | 101.75 | 101.74 | 101.75 | 101.74 | 96.41 | 96.43 | 96.42 | 96.43 | 96.42 | 99.10 | 101.75 | 101.75 | 101.75 | 101.75 | 101.75 | 101.75 |
| B-Index | 4 | 4 | 4 | 4 | 4 | | | | | | 2 | 4 | 4 | 4 | 4 | 4 | 4 |
| C-Index | | 0.1 | 0.05 | 0.1 | 0.05 | | 0.1 | 0.05 | 0.1 | 0.05 | 0.1 | 0.1 | 0.1 | 0.1 | 0.1 | 0.1 | 0.1 |

**Tabelle 2, n.g. = nicht ausgehärtet, g. = ausgehärtet, n.b. = nicht bestimmt**

| | **R1** | **E1** | **E2** | **R2** | **R3** | **R4** | **R5** | **R6** | **R7** | **R8** | **R9** | **E1** | **E3** | **E4** | **E5** | **E6** | **E7** |
|---|---|---|---|---|---|---|---|---|---|---|---|---|---|---|---|---|---|
| E-Modul (35' 175°C) | 3470 | 3430 | 3450 | 3570 | 3640 | n.b. | n.b. | n.b. | n.b. | n.b. | 3720 | | | | | | |
| ZSF (10' 140°C) | 13.7± 1.3 | 21.4 ± 0.5 | 17.3±0.6 | 24.2±0.5 | 20.2±0.9 | n.g. | n.g. | n.g. | n.g. | n.g. | 19.0 ± 1.2 | 21.4 ± 0.5 | 19.5 ± 0.7 | 18.1 ± 0.5 | 19.2 ± 0.4 | 17.5 ± 0.8 | 12.7 ± 1.7 |
| IP RT (10' 140°C) | 1.4± 1.8 | 8.7± 1.2 | 4.3± 1.3 | 9.5± 0.1 | 9.8± 0.2 | n.g. | n.g. | n.g. | n.g. | n.g. | 5.2 ± 0.4 | | | | | | |
| Visko initial 25°C | 1890 | 2790 | 1900 | 1940 | 2110 | n.b. | n.b. | n.b. | n.b. | n.b. | 2370 | 2790 | 2110 | 2110 | 2120 | 2250 | 2430 |
| Visko 1W 50 25°C | 2160 (+14) | 2610 (-6) | 2240 (+18) | 2710 (+40) | 2840 (+35) | n.b. | n.b. | n.b. | n.b. | n.b. | 2590 (+9) | 2610 (-6) | 2500 (+18) | 2600 (+23) | 2700 (+27) | 2500 (+11) | 2650 (+9) |
| Visko 1W60 25°C | 4450 (+135) | 4070 (+46) | 3520 (+85) | g. | g. | n.b. | n.b. | n.b. | n.b. | n.b. | 5340 (+125) | 4070 (+46) | 7470 (+254) | 4610 (+118) | 10700 (+405) | 8990 (+300) | 5310 (+119) |

## Patentansprüche

1. Hitzehärtende Epoxidharzzusammensetzung umfassend
a) mindestens ein Epoxidharz **A** mit durchschnittlich mehr als einer Epoxidgruppe pro Molekül;
b) mindestens einen Härter **B** für Epoxidharze, wobei es sich bei dem Härter **B** um ein Dihydrazid ausgewählt aus der Gruppe bestehend aus Glutarsäuredihydrazid, Adipinsäuredihydrazid und Pimelinsäuredihydrazid, vorzugsweise Adipinsäuredihydrazid handelt; und
c) mindestens einen Beschleuniger C der Formel (la) oder (Ib) 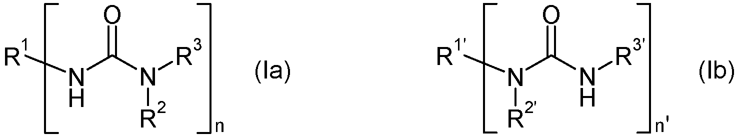
wobei R¹ für H oder einen n-wertigen aliphatischen, cycloaliphatischen oder araliphatischen Rest steht;
R² und R³
entweder
je unabhängig von einander für eine Alkylgruppe oder Aralkylgruppe stehen;
oder
zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist, stehen;
R^{1'} für einen n'-wertigen aliphatischen, cycloaliphatischen oder araliphatischen Rest steht;
R^{2'} für eine Alkylgruppe oder Aralkylgruppe oder Alkylengruppe steht;
R^{3'} unabhängig von einander für H oder eine Alkylgruppe oder Aralkylgruppe steht; und
n und n' je für einen Wert von 1 bis 4, insbesondere für 1 oder 2, steht, wobei das Verhältnis des Anteils Epoxidgruppen des Epoxidharz A in mol / Anteil von Dihydrazid in mol 3 - 5, insbesondere 3.5 - 4.5, beträgt.

2. Hitzehärtende Epoxidharzzusammensetzung gemäss Anspruch 1, **dadurch gekennzeichnet, dass** R¹ für H steht und R² und R³ je für eine Methyl-, Ethyl- oder Propylgruppe, bevorzugt je für eine Methylgruppe, stehen und n = 1 ist.

3. Hitzehärtende Epoxidharzzusammensetzung gemäss Anspruch 1, **dadurch gekennzeichnet, dass** R¹ für 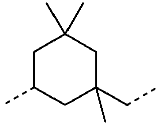 steht und R² und R³ je für eine Methyl-, Ethyl- oder Propylgruppe, bevorzugt je für eine Methylgruppe, stehen, und n = 2 ist.

4. Hitzehärtende Epoxidharzzusammensetzung gemäss einem der vorhergehenden Ansprüche, **dadurch gekennzeichnet, dass** das Dihydrazid eine mittlere Partikelgrösse D₅₀ von ≤ 100 µm, ≤ 50 µm, 0.5 - 50 µm, 1 - 50 µm, 1 - 40 µm, insbesondere 1 - 20 µm, bevorzugt 2 - 20 µm, insbesondere bevorzugt 2 - 15 µm, aufweist.

5. Hitzehärtende Epoxidharzzusammensetzung gemäss einem der vorhergehenden Ansprüche, **dadurch gekennzeichnet, dass** die hitzehärtende Epoxidharzzusammensetzung weniger als 0.5 Gew.-%, bevorzugt weniger als 0.3 Gew.-%, am meisten bevorzugt weniger als 0.1 Gew.-%, bezogen auf das Gesamtgewicht der Epoxidharzzusammensetzung, an Dicyandiamid aufweist.

6. Hitzehärtende Epoxidharzzusammensetzung gemäss einem der vorhergehenden Ansprüche, **dadurch gekennzeichnet, dass** das Verhältnis des Anteils Beschleuniger **C** in Gramm pro mol Epoxidgruppen des Epoxidharz **A** von 0.01 - 0.5 g/mol Epoxidgruppen, insbesondere 0.05 - 0.3 g/mol Epoxidgruppen, besonders bevorzugt 0.075 - 0.2 g/mol Epoxidgruppen, am meisten bevorzugt 0.08 - 0.15 g/mol Epoxidgruppen, beträgt.

7. Hitzehärtende Epoxidharzzusammensetzung gemäss einem der vorhergehenden Ansprüche, **dadurch gekennzeichnet, dass** die hitzehärtende Epoxidharzzusammensetzung zusätzlich mindestens einen Zähigkeitsverbesserer **D** ausgewählt aus der Gruppe bestehend aus endständig blockierten Polyurethanpolymeren **D1,** Flüssigkautschuken **D2** und Core-Shell-Polymeren **D3** aufweist, vorzugsweise handelt es sich um endständig blockiertes Polyurethanpolymer **D1.**

8. Hitzehärtende Epoxidharzzusammensetzung gemäss einem der vorhergehenden Ansprüche, **dadurch gekennzeichnet, dass** der Anteil des Epoxidharzes **A** 10 - 60 Gew.-%, insbesondere 30 - 50 Gew.-%, bezogen auf das Gesamtgewicht der Epoxidharzzusammensetzung, beträgt.

9. Verwendung einer hitzehärtenden Epoxidharzzusammensetzung gemäss einem der Ansprüche 1 bis 8 als einkomponentiger hitzehärtender Klebstoff, insbesondere als hitzehärtender einkomponentiger Rohbauklebstoff im Fahrzeugbau.

10. Verfahren zur Verklebung von hitzestabilen Substraten umfassend die Schritte
i) Applizieren einer hitzehärtenden Epoxidharzzusammensetzung gemäss einem der Ansprüche 1 bis 8 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 100 - 220°C, insbesondere von 120 - 200°C, bevorzugt zwischen 130 und 150°C besonders bevorzugt zwischen 130 und 140°C;
wobei das Substrat **S2** aus dem gleichen oder einem unterschiedlichen Material wie das Substrat **S1** besteht.

11. Verfahren gemäss Anspruch 10, wobei in dem Schritt iii) Erhitzen der Zusammensetzung auf eine Temperatur von 100 - 220°C, insbesondere von 120 - 200°C, bevorzugt zwischen 130 und 150°C besonders bevorzugt zwischen 130 und 140°C die Zusammensetzung für 10 min - 6 h, 10 min - 2 h, 10 min - 60 min, 10 min - 30 min, 10 min - 20 min, besonders bevorzugt 10 min - 15 min, bei der vorgenannten Temperatur belassen wird.

12. Verklebter Artikel erhalten aus einem Verfahren gemäss einem der Ansprüche 10 bis 11.

## Claims

1. Thermosetting epoxy resin composition comprising
a) at least one epoxy resin A having an average of more than one epoxy group per molecule;
b) at least one curing agent B for epoxy resins, where the curing agent B is a dihydrazide selected from the group consisting of glutaric dihydrazide, adipic dihydrazide and pimelic dihydrazide, preferably adipic dihydrazide; and
c) at least one accelerator C of the formula (Ia) or (Ib) 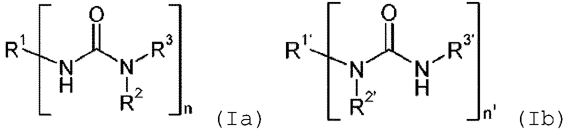
where R¹ is H or an n-valent aliphatic, cycloaliphatic or araliphatic radical;
R² and R³ are
either
each independently an alkyl group or aralkyl group;
or
together are a divalent aliphatic radical which has 3 to 20 carbon atoms and is part of an optionally substituted heterocyclic ring having 5 to 8, preferably 6, ring atoms;
R^{1'} is an n'-valent aliphatic, cycloaliphatic or araliphatic radical;
R^{2'} is an alkyl group or aralkyl group or alkylene group;
R^{3'} is independently H or an alkyl group or aralkyl group; and
n and n' each have a value of 1 to 4, in particular 1 or 2, where the ratio of the proportion of epoxy groups of epoxy resin A in mol/proportion of dihydrazide in mol is 3-5, in particular 3.5-4.5.

2. Thermosetting epoxy resin composition according to Claim 1, **characterized in that** R¹ is H, and R² and R³ are each a methyl, ethyl or propyl group, preferably each a methyl group, and n = 1.

3. Thermosetting epoxy resin composition according to Claim 1, **characterized in that** R¹ is 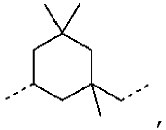 and R² and R³ are each a methyl, ethyl or propyl group, preferably each a methyl group, and n = 2.

4. Thermosetting epoxy resin composition according to any of the preceding claims, **characterized in that** the dihydrazide has a median particle size D₅₀ of ≤ 100 µm, ≤ 50 µm, 0.5-50 µm, 1-50 µm, 1-40 µm, especially 1-20 µm, preferably 2-20 µm, especially preferably 2-15 µm.

5. Thermosetting epoxy resin composition according to any of the preceding claims, **characterized in that** the thermosetting epoxy resin composition includes less than 0.5% by weight, preferably less than 0.3% by weight, most preferably less than 0.1% by weight, based on the total weight of the epoxy resin composition, of dicyandiamide.

6. Thermosetting epoxy resin composition according to any of the preceding claims, **characterized in that** the ratio of the proportion of accelerator C in grams per mole of epoxy groups of the epoxy resin A is 0.01-0.5 g/mol of epoxy groups, especially 0.05-0.3 g/mol of epoxy groups, more preferably 0.075-0.2 g/mol of epoxy groups, most preferably 0.08-0.15 g/mol of epoxy groups.

7. Thermosetting epoxy resin composition according to any of the preceding claims, **characterized in that** the thermosetting epoxy resin composition additionally includes at least one toughness improver D selected from the group consisting of terminally blocked polyurethane polymers D1, liquid rubbers D2 and core-shell polymers D3, preferably a terminally blocked polyurethane polymer D1.

8. Thermosetting epoxy resin composition according to any of the preceding claims, **characterized in that** the proportion of the epoxy resin A is 10-60% by weight, especially 30-50% by weight, based on the total weight of the epoxy resin composition.

9. Use of a thermosetting epoxy resin composition according to any of Claims 1 to 8 as one-component thermosetting adhesive, especially as thermosetting one-component bodywork adhesive in motor vehicle construction.

10. Method of bonding heat-stable substrates, comprising the steps of
i) applying a thermosetting epoxy resin composition according to any of Claims 1 to 8 to the surface of a heat-stable substrate S1, especially of a metal;
ii) contacting the thermosetting epoxy resin composition applied with the surface of a further heat-stable substrate S2, especially of a metal;
iii) heating the composition to a temperature of 100-220°C, especially of 120-200°C, preferably between 130 and 150°C, more preferably between 130 and 140°C;
in which the substrate S2 consists of the same material as or a different material from the substrate S1.

11. Method according to Claim 10, wherein, in step iii) of heating the composition to a temperature of 100-220°C, especially of 120-200°C, preferably between 130 and 150°C, more preferably between 130 and 140°C, the composition is left at the aforementioned temperature for 10 min - 6 h, 10 min - 2 h, 10 min - 60 min, 10 min - 30 min, 10 min - 20 min, more preferably 10 min - 15 min.

12. Adhesive-bonded article obtained from a method according to any of Claims 10 to 11.

## Revendications

1. Composition de résine époxy thermodurcissable comprenant
a) au moins une résine époxy A présentant en moyenne plus d'un groupe époxy par molécule ;
b) au moins un durcisseur B pour résines époxy, le durcisseur B étant un dihydrazide choisi dans le groupe constitué de dihydrazide de l'acide glutarique, de dihydrazide de l'acide adipique et de dihydrazide de l'acide pimélique, de préférence du dihydrazide de l'acide adipique ; et
c) au moins un accélérateur C de formule (Ia) ou (Ib) 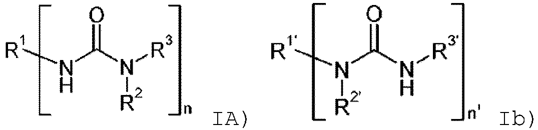
dans lesquelles R¹ représente H ou un radical aliphatique, cycloaliphatique ou araliphatique n-valent ;
R² et R³
soit
représentent chacun indépendamment l'un de l'autre un groupe alkyle ou aralkyle ;
soit
représentent ensemble un radical aliphatique divalent comportant 3 à 20 atomes de carbone, qui fait partie d'un cycle hétérocyclique éventuellement substitué comportant 5 à 8, de préférence 6, atomes de cycle ;
R^{1'} représente un radical aliphatique, cycloaliphatique ou araliphatique n'-valent ;
R²' représente un groupe alkyle, aralkyle ou alkylène ; R³' représente indépendamment l'un de l'autre H ou un groupe alkyle ou aralkyle ; et
n et n' représentent chacun une valeur de 1 à 4, en particulier 1 ou 2, le rapport entre la quantité de groupes époxy de la résine époxy A en mol et la quantité de dihydrazide en mol étant de 3 à 5, en particulier de 3,5 à 4,5.

2. Composition de résine époxy thermodurcissable selon la revendication 1, **caractérisée en ce que** R¹ représente H, R² et R³ représentant chacun un groupe méthyle, éthyle ou propyle, de préférence chacun un groupe méthyle, et n étant égal à 1.

3. Composition de résine époxy thermodurcissable selon la revendication 1, **caractérisée en ce que** R¹ représente 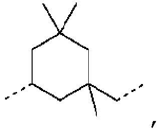 R² et R³ représentant chacun un groupe méthyle, éthyle ou propyle, de préférence chacun un groupe méthyle, et n étant égal à 2.

4. Composition de résine époxy thermodurcissable selon l'une quelconque des revendications précédentes, **caractérisée en ce que** le dihydrazide présente une taille moyenne de particules D₅₀ de ≤ 100 µm, ≤ 50 µm, de 0,5 à 50 µm, de 1 à 50 µm, de 1 à 40 µm, en particulier de 1 à 20 µm, de préférence de 2 à 20 µm, de manière particulièrement préférée de 2 à 15 µm.

5. Composition de résine époxy thermodurcissable selon l'une quelconque des revendications précédentes, **caractérisée en ce que** la composition de résine époxy thermodurcissable contient moins de 0,5 % en poids, de préférence moins de 0,3 % en poids, de manière tout particulièrement préférée moins de 0,1 % en poids, de dicyandiamide, par rapport au poids total de la composition de résine époxy.

6. Composition de résine époxy thermodurcissable selon l'une quelconque des revendications précédentes, **caractérisée en ce que** le rapport de la quantité d'accélérateur C, en grammes par mole de groupes époxy de la résine époxy A, est de 0,01 à 0,5 g/mol de groupes époxy, en particulier de 0,05 à 0,3 g/mol de groupes époxy, de manière particulièrement préférée de 0,075 à 0,2 g/mol de groupes époxy, de manière tout particulièrement préférée de 0,08 à 0,15 g/mol de groupes époxy.

7. Composition de résine époxy thermodurcissable selon l'une quelconque des revendications précédentes, **caractérisée en ce que** la composition de résine époxy thermodurcissable comprend en outre au moins un agent améliorant la ténacité D choisi dans le groupe constitué de polymères de polyuréthane D1 bloqués en bout de chaîne, de caoutchoucs liquides D2 et de polymères noyau-enveloppe D3, de préférence il s'agit d'un polymère de polyuréthane D1 bloqué en bout de chaîne.

8. Composition de résine époxy thermodurcissable selon l'une quelconque des revendications précédentes, **caractérisée en ce que** la proportion de la résine époxy A est de 10 à 60 % en poids, en particulier de 30 à 50 % en poids, par rapport au poids total de la composition de résine époxy.

9. Utilisation d'une composition de résine époxy thermodurcissable selon l'une quelconque des revendications 1 à 8 en tant qu'adhésif thermodurcissable monocomposant, en particulier en tant qu'adhésif de ferrage thermodurcissable monocomposant dans la construction automobile.

10. Procédé de collage de substrats thermostables comprenant les étapes
i) l'application d'une composition de résine époxy thermodurcissable selon l'une quelconque des revendications 1 à 8 sur la surface d'un substrat thermostable S1, en particulier d'un métal ;
ii) la mise en contact de la composition de résine époxy thermodurcissable appliquée avec la surface d'un autre substrat thermostable S2, en particulier d'un métal ;
iii) le chauffage de la composition à une température de 100 à 220 °C, en particulier de 120 à 200 °C, de préférence comprise entre 130 et 150 °C, de manière particulièrement préférée comprise entre 130 et 140 °C ; le substrat S2 étant constitué du même matériau que le substrat S1 ou d'un matériau différent de celui du substrat S1.

11. Procédé selon la revendication 10, dans lequel, à l'étape iii) de chauffage de la composition à une température de 100 à 220 °C, en particulier de 120 à 200 °C, de préférence comprise entre 130 et 150 °C, de manière particulièrement préférée comprise entre 130 et 140 °C, la composition est maintenue à la température précitée pendant 10 min à 6 h, 10 min à 2 h, 10 min à 60 min, 10 min à 30 min, 10 min à 20 min, de manière particulièrement préférée pendant 10 min à 15 min.

12. Article collé obtenu par un procédé selon l'une quelconque des revendications 10 à 11.
